# EUROPÄISCHE PATENTANMELDUNG

(11) **EP 0 674 421 A1**
(43) Veröffentlichungstag der Anmeldung: **27.09.1995**
(21) Anmeldenummer: 95103620.1
(22) Anmeldetag: 14.03.1995
(51) Int. Cl.: H04M 11/08

(54) **Telekommunikationsendgerät insbesondere für elektronische Massenpost und Nachrichtenverteilnetz**

(30) Priorität: 18.03.1994 DE 4409458
(71) Anmelder: Alcatel SEL Aktiengesellschaft, D-70435 Stuttgart (DE)
(72) Erfinder: Klumpp, Dieter, Dr, D-70193 Stuttgart (DE)
(74) Vertreter: Knecht, Ulrich Karl

(57) **Zusammenfassung**

Es soll ein Telekommunikationsendgerät für den Empfang von elektronischer Massenpost realisiert werden.

Das erfindungsgemäße Endgerät besteht aus einer Steuereinheit (PC), einer Anzeigeeinheit (D), zum Anzeigen ob wenigstens eine neue Nachricht vorliegt, und mit Eingabemitteln (T), zum Aktivieren einer Übersicht aus in den empfangenen Nachrichten enthaltenen, die Nachrichten charakterisierenden Überschriften auf der Anzeigeeinheit und zum Auswählen und Darstellen von den Überschriften zugeordneten Nachrichten auf der Anzeigeeinheit und/oder zum Löschen der Überschriften und/oder zum Löschen der den Überschriften zugeordneten Nachrichten.

## Beschreibung

Supermärkte werben mit Sonderangeboten bisher durch die Verteilung von Handzetteln im entsprechenden räumlichen Umfeld des Supermarktes; aufgrund des Entstehens großer Einkaufszentren werden auch im nicht unbeträchtlichen Maße große Zeitungsanzeigen bzw. Beilagen in Tageszeitungen geschaltet. Dies führt unter anderem dazu, daß wegen eines "Schnäppchens" erheblicher Verkehr induziert wird, der in gesamtwirtschaftlicher Sicht unvorteilhaft ist. Aus der Praxis werden Fälle berichtet, wo Hausfrauen eine 20-km-Fahrt unternommen wird, um wenige DM bei einem Sonderangebot einzusparen, das es im nächsterreichbaren Supermarkt ebenfall gibt. Hier ist keine ausreichende Transparenz für den Kunden gegeben, er würde eine bessere Transparenz sehr wohl honorieren.

Das Management moderner Kommunen stellt zunehmend auf optimierte Entsorgungsketten um. Aus der Praxis wird beobachtet, daß zum Beispiel Sperrmüll-Termine über den eigentlichen Einzugsbereich hinaus bekanntgegeben werden. Durch die in der Regel per Tageszeitung erfolgenden Ankündigungen wird ein erhebliches Maß an Verkehr induziert, das weit über die "semiprofessionellen" Sperrmüllsucher hinausgeht. Entsorger schätzen, daß etwa 30 % der abgelagerten Sperrmüllgüter von anderen Wohnbezirken herangeschafft werden. In Stuttgart wurden wiederholt Sperrmüll-Ablieferer aus Umlandgemeinden gesehen, umgekehrt dürfte dies ebenfalls der Fall sein. Weil die Dienstleistung kostenfrei ist, scheint hier anders als bei der normalen Mülltonne - kein individueller Vorteil vorzuliegen, sondern ein reiner Mangel an Transparenz der entsprechenden Termine.

Eine Vielzahl von Prospekt- und Handzettelanbietern stößt auf immer größere Probleme an den Briefkästen, die deklariert sind mit dem inzwischen von der Rechtssprechung als verbindlich angesehenen - Aufkleber "Bitte keine Werbung einwerfen". Aus diesem Grund wird beobachtet, daß in den Hauseingängen sich Handzettel, die durch Boten ausgegeben werden, zu über 90 % als Abfall ansammelt. Der Normalfall scheint zu sein, daß die Adressaten den Handzettel kurz überfliegen und dann wieder weglegen, ohne sich um seine Entsorgung Gedanken zu machen. Die Handzettel werden also sehr wohl gelesen, sonst würden die Anbieter solche ja nicht mehr verwenden. Umgekehrt sind bei schlechter Botenversorgung bzw. prohibitiven Beförderungskosten und -zeiten für Warenanbieter und Verbraucher die Einschaltung einer Lokalzeitung unverzichtbar.

Der Erfindung liegt die Aufgabe zugrunde ein Telekommunikationsendgerät, insbesondere für den Empfang von elektronischer Massenpost und ein zugehöriges Nachrichtenverteilnetz zu realisieren. Diese Aufgabe wird erfindungsgemäß durch die Lehren der Patentansprüche 1 und 9 gelöst.

Weitere vorteilhafte Ausgestaltungen des Gegenstandes der Erfindung sind den Unteransprüchen zu entnehmen.

Das erfindungsgemäße Telekommunikationsendgerät könnte vorteilhafter Weise ein "Door-Message-Terminal" sein, in Form eines 40 x 30 x 5 cm (etwas über DIN-A-4-Größe) großen Wandkasten, der in unmittelbarer Nähe des Wohnungseingangs auf der Innenseite der Wohnung angebracht ist. In einzelnen Fällen sind natürlich auch gebäudebezogene Terminals denkbar. Das Terminal wird damit in unmittelbare funktionale Nähe der Wohnungstüre oder der Haustüre gebracht, ist also gedanklich in der Nähe der Hausprechanlage anzusiedeln.

Mit der Einrichtung eines solchen Door-Message-Terminals ist das in der Telekommunikation ansonsten stets präsente Problem eines Netzeffektgutes insofern vermieden, als bei Einrichtung einer entsprechenden regionalen Einheit eben zunächst nur die regionalen Anbieter über einen regionalen Diensteanbieter die Adressaten erreichen können. Die kritische Größe ist gewiß bei einer Region anzusehen, weil vermittlungsseitig und hinsichtlich der Stückzahl ein nicht unbeträchtlicher Kostenblock für die technische Entwicklung vorzusehen ist. Die eigentliche Bereitstellung jedoch könnte bereits im lokalen Bereich von Großstädten (100.000 Teilnehmer) zu funktionierenden (und refinanzierenden) Informationsketten führen.

Dieser für den Verbraucher - abgesehen von den eigeninduszierten Energie- und Papierkosten - vor allem hinsichtlich der Gebühren kostenlose "Door-Message-Dienst" brächte zunächst Vorinvestitionen seitens eines Netzbetreibers und eines Dienstebetreibers, sowie bei den Informationsanbietern. Andererseits müßten die Anbieter ihre bisher an den Briefdienst oder Boten gekoppelten Gebühren für die neue Informationsübermittlung entrichten.

Im folgenden wird ein Ausführungsbeispiel anhand der Figuren erläutert.

Es zeigen:

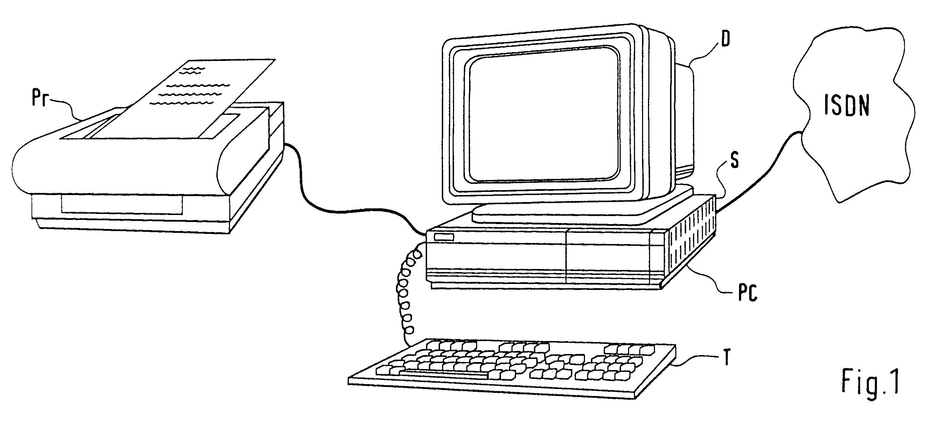

- Figur 1: ein Telekommunikationsendgerät gemäß der Erfindung
- Figur 2a: Darstellung einer Übersicht von Überschriften über empfangene Nachrichten und
- Figur 2b: eine einer Überschrift zugeordneten Nachrichtendarstellung.

Ein erfindungsgemäßes Telekommunikationsendgerät zum empfangen von elektronischer Massenpost weist eine Steuereinheit PC, eine Anzeigeeinheit D und Eingabemittel T auf. Erfindungsgemäß wird zunächst das Eintreffen einer neuen Nachricht angezeigt, welches im einfachsten Fall z.B. durch eine Leuchtdiode (blinkend) erfolgen kann. Daraufhin kann der Benutzer über die Eingabemittel, z.B. in Form einer Tastatur oder einer einfachen Cursorsteuerung mittels einer Maus eine Übersicht von Überschriften, die in den eingetroffenen Nachrichten enthalten sind sich anzeigen lassen. Danach kann der Benutzer sich einzelnen Überschriften zugeordnete Nachrichten anzeigen lassen oder die Überschriften und/oder die dazugehörigen Nachrichten löschen, so daß auch unerwünschte Massendrucksachen niemandes Privatsphäre verletzen können. Der Benutzer kann dann eine ihn interessierende Nachricht über einen anschließbaren oder integrierten Drucker Pr ausgeben lassen. Wichtig ist dabei, daß er nicht gezwungen wird, einen Ausdruck vorzunehmen, damit die Frage des Nachfüllens von Papier verursacherbezogen beim Haushalt bleibt.

Das Telekommunikationsendgerät kann eine S_{Q}-Schnittstelle S für ein diensteintegrierendes Nachrichtennetz ISDN sein, so daß in vorteilhafter Weise, gesteuert durch die Steuereinheit PC Nachrichten in Packetformat über einen Signalisierungskanal empfangen werden könne. Wie eine solche D-Kanal Packetvermittlung erfolgen kann ist z.B. der deutschen Patentanmeldung DE 41 06 183 A1 zu entnehmen. Die Nachrichten können auch über einen Nutzkanal (B-Kanal) des ISDN übertragen werden.

Gemäß einer weiteren Ausgestaltung der Erfindung kann das Telekommunikationsendgerät auch eine Schnittstelle zum Anschluß an ein Nachrichtenverteilnetz, wie ein Breitbandverteilnetz für Ton- und Fernsehprogramme enthalten. Ein solches Breitbandverteilnetz ist z.B. der deutschen Patentanmeldung DE 34 03 659.8 A1 zu entnehmen.

Besonders vorteilhaft kann das erfindungsgemäße Telekommunikationsendgerät ein Datenverarbeitungsendgerät wie ein Personal Computer mit Telefonfunktionen für ein ISDN Netz oder ein Fernsehempfänger mit entsprechender Fernbedienung für ein Ton- und Fernsehprogrammverteilnetz sein. Dabei würde die Anzeigeeinheit D dem Bildschirm des Personal Computers oder des Fernsehempfängers entsprechen.

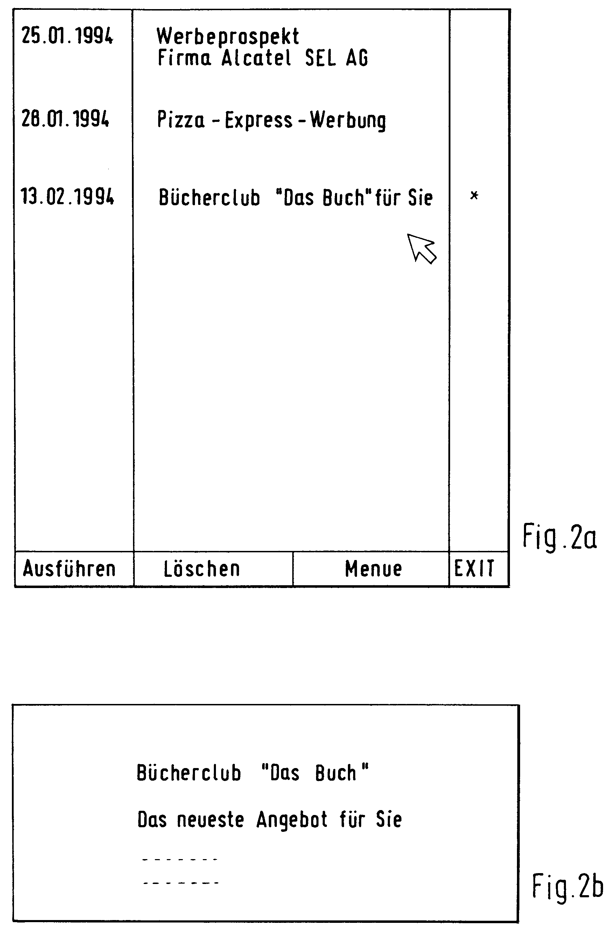

Wird nun eine Nachricht empfangen und auf der Anzeigeeinheit D in Form von Überschriften dargestellt, vgl. Fig. 2a, so kann z.B. mit einer Maus ein Cursor auf die Überschrift "Bücherclub... " zeigen und dann die zugeordnete Nachricht, vgl. Figur 2b, dargestellt werden.

Wie in Figur 2a dargestellt, kann jedes beliebige Benutzermenue gesteuert werden. Insbesondere ist die Funktion Löschen notwendig, um ungewünschte Nachrichten zu löschen oder um zunächst nur die Überschriften rauszuwerfen, aber später wieder auf die eigentlichen Nachrichten zurückgreifen zu können.

Zusätzlich ist es möglich, eine Nachricht abzusenden, z.B. über die Telefonfunktion des Personal Computers um in einer die Nachrichten versendenden Diensteanbieter-Zentrale weitere Nachrichten anzufordern oder auch um Waren zu bestellen.

Dabei wäre eine sehr kostengünstige Übertragung einer DIN-A4-Seite zu einem Dienstleistungsanbieter, zum Beispiel für den Ferneinkauf möglich. Ebenfalls über den Anbieter des Dienstes würde die Warenbestellung an den gewünschten Supermarkt oder an den gewünschten Einzelhändler weitergeleitet; hierfür wären Gebühren zu entrichten.

Erfindungsgemäß ist auch ein sogenannter Dienstewechsel, d.h. ein Umschalten auf einen Faxsimiledienst möglich. In diesem Fall würde eine nicht veränderbare Absenderkennung des jeweiligen Haushalts für die notwendige Sicherheit sorgen.

Zur Realisierung einer solchen elektronischen Massenpost wird erfindungsgemäß ein Nachrichtenverteilnetz mit einer Diensteanbieterzentrale vorgeschlagen, das zum Verteilen von Nachrichten im Packetformat über einen Signalisierungskanal oder einen Nutzkanal eines diensteintegrierenden Nachrichtennetz ISDN erfolgen könnte. Gerade die für die Verbraucher zu erwartenden geringen Aufkommen von Signalisierungsinformation im D-Kanal würde sehr kostengünstig ohne zusätzliche Maßnahme eine Übertragung der Nachrichten ermöglichen. Außerdem kann für das Nachrichtenverteilnetz auch das schon zu sehr vielen Haushalten verlegte Ton- und Fernsehprogrammkabelnetz verwendet werden, wobei dann das Telekommunikationsendgerät idealerweise ein Fernsehapperat, mit Fernbedienung als Eingabemittel, wäre.

Es wird damit erreicht, daß durch einen neu zu errichtenden Dienstanbieter mit Hilfe vorhandener Infrastruktur jeder Haushalt erreicht werden kann. Dadurch kann der Transport von Massendrucksachen verringert und entsprechend der physische Transport so verteuert werden, daß es für den Diensteanbieter lohnend wird, die Haushalte auf elektronischem Wege zu erreichen.

## Patentansprüche

1. Telekommunikationsendgerät für den Empfang von Nachrichten, insbesondere elektronische Massenpost, mit einer Steuereinheit (PC), einer Anzeigeeinheit (D), zum Anzeigen ob wenigstens eine neue Nachricht vorliegt, und mit Eingabemitteln (T), zum Aktivieren einer Übersicht aus, in den empfangenen Nachrichten enthaltenen, die Nachrichten charakterisierenden Überschriften auf der Anzeigeeinheit (D) und zum Auswählen und Darstellen von den, den Überschriften zugeordneten Nachrichten auf der Anzeigeeinheit und/oder zum Löschen der Überschriften und/oder zum Löschen der den Überschriften zugeordneten Nachrichten.

2. Telekommunikationsendgerät nach Anspruch 1, mit einem Drucker (Pr), zum Ausgeben von über die Eingabemittel (T) selektierten Nachrichten.

3. Telekommunikationsendgerät nach Anspruch 1 oder 2, mit einer Schnittstelle (S) zum Anschluß an ein diensteintegriertes Nachrichtennetz (ISDN).

4. Telekommunikationsendgerät nach Anspruch 3, bei dem die Schnittstelle ( S), gesteuert durch die Steuereinheit (PC), entweder Nachrichten in Paketformat über einen Signalisierungskanal oder über einen Nutzkanal empfangen kann.

5. Telekommunikationsendgerät nach Anspruch 1 oder 2, mit einer Schnittstelle zum Anschluß an ein Nachrichtenverteilnetz, insbesondere an ein Breitbandverteilnetz für Ton- und Fernsehprogramme.

6. Telekommunikationsendgerät nach Anspruch 1 oder 2, das ein Datenverarbeitungsendgerät mit Telefonfunktionen oder ein Fernsehempfänger ist.

7. Telekommunikationsendgerät nach Anspruch 1, mit Mitteln zum Absenden einer Nachricht an eine die Daten empfangenen Nachrichten versendenden Diensteanbieter-Zentrale zum Anfordern weiterer Nachrichten oder zum Bestellen von Waren.

8. Telekommunikationsendgerät nach Anspruch 4, mit Mitteln zum Umschalten auf einen Faxsimiledienst des diensteintegrierenden Nachrichtennetzes, zum Absenden einer Faxsimilenachricht an eine die empfangenen Nachrichten versendenden Diensteanbieter-Zentrale.

9. Nachrichtenverteilnetz mit einer Diensteanbieter-Zentrale, insbesondere für elektronische Massenpost und einem diensteintegrierten Nachrichtennetz zum Verteilen von Nachrichten im Packetformat über einen Signalisierungskanal oder einen Netzkanal oder zum Verteilen von Nachrichten über ein Breitbandverteilnetz für Ton- und Fernsehprogramme zu einer Vielzahl von Telekommunikationsendgeräten nach einem der Ansprüche 1 bis 8.
